# EUROPÄISCHE PATENTSCHRIFT

(11) **EP 0 523 377 B1**
(45) Veröffentlichungstag und Bekanntmachung des Hinweises auf die Patenterteilung: **02.08.1995**
(21) Anmeldenummer: 92110008.7
(22) Anmeldetag: 13.06.1992
(51) Int. Cl.: B23K 11/06

(54) **Mitnehmer zum Fördern dünner Bleche an einer Dosenschweissmaschine**
Device for delivering thin sheet to a can welding machine
Dispositif d'amenée de tôles minces à une machine de soudage de boîtes

(30) Priorität: 19.07.1991 CH 2159/91
(43) Veröffentlichungstag der Anmeldung: 20.01.1993
(73) Patentinhaber: ELPATRONIC AG, CH-6303 Zug (CH)
(72) Erfinder: Hoffmann, Hans-Wilhelm, CH-8967 Widen (CH); Portmann, Niklaus, CH-5454 Bellikon (CH)

(56) Entgegenhaltungen:
- EP-A- 0 289 744
- EP-A- 0 290 765
- SOVIET INVENTIONS ILLUSTRATED,Sektion M, Woche 8747,2 Dezember 1987,Derwent Publications Ltd,London,GB; &SU- A-1303338(GIPRONEFTESPET SMONT) 29-12-1985 *kLASSE M23,Seite 47,Nr 87-333420*

## Beschreibung

Die Erfindung betrifft einen Mitnehmer zum Fördern dünner Bleche an einer Dosenschweißmaschine, mit
- einem Tragkörper, der an einer Fördereinrichtung zu befestigen ist, und
- einem Schubkörper, der aus verschleißfestem Werkstoff besteht und am Tragkörper derart befestigt ist, daß er bei dessen Vorwärtsbewegung an einer Hinterkante eines zu fördernden Blechs angreift.

Mitnehmer dieser Art (siehe z.B. EP-A2-0 289 744) werden beispielsweise an kontinuierlich oder intermittierend umlaufenden Förderketten befestigt; sie können zu diesem Zweck so ausgebildet sein, daß sie je ein Kettenglied ganz oder teilweise ersetzen. Bei bekannten Mitnehmern dieser Art besteht der Tragkörper aus Stahl und weist an seiner Vorderseite eine teilzylindrische Mulde auf, an der ein zylindrischer Schubkörper aus keramischem Werkstoff festgeklebt ist.

Solche Mitnehmer werden an Dosenschweißmaschinen vorwiegend dazu verwendet, zylindrische Dosenzargen, die in einer Rundvorrichtung aus je einer rechteckigen Platine gerundet worden sind, längs eines Schweißarmes in eine Schweißstation zu schieben, in der sie zwischen Elektrodenrollen hindurchlaufen, um eine Längsnaht zu erhalten. Auf diese Weise können 300 bis 600 oder sogar mehr Zargen aus Blech von beispielsweise 0,2 mm Dicke gerundet und geschweißt werden. Dabei werden die Zargen am Ausgang der Rundvorrichtung von je zwei oder mehr Mitnehmern erfaßt und in kurzer zeit auf die Schweißgeschwindigkeit beschleunigt, die bei gegebener Anzahl Zargen je Zeiteinheit umso größer ist je länger die Zargen sind. Vor allem bei langen Zargen aus Dünnblech können die zum Beschleunigen erforderlichen Kräfte so groß werden, daß die Mitnehmer an den hinteren Rändern der Zargen Eindrücke erzeugen. Solche Eindrücke sind zwar für das Längsnahtschweißen der Zargen ohne Bedeutung, können aber stören, wenn an die Zargen später je ein Deckel und ein Boden angebördelt wird.

Um solche Eindrücke zu vermeiden, war es bisher erforderlich, entweder die Anzahl der je Zeiteinheit geförderten Zargen zu begrenzen und dadurch einen Teil der Leistungsfähigkeit der Schweißstation ungenutzt zu lassen oder eine verhältnismäßig lange Förderstrecke zum allmählichen Beschleunigen der Zargen vorzusehen.

Der Erfindung liegt die Aufgabe zugrunde, beim Fördern dünner Bleche an einer Dosenschweißmaschine hohe Beschleunigungen zu ermöglichen.

Die Aufgabe ist erfindungsgemäß ausgehend von einem Mitnehmer der beschriebenen Gattung dadurch gelöst, daß der Schubkörper über mindestens eine elastische Zwischenlage rückwärtsfedernd am Tragkörper abgestützt ist.

Damit wird erreicht, daß der Schubkörper bei einem Aufprall auf ein zu förderndes Blech gegenüber dem Tragkörper vorübergehend zurückbleibt, wobei in der Zwischenlage elastische Formänderungsarbeit gespeichert wird, die anschließend an das Blech abgegeben und zu dessen Beschleunigung genutzt wird. Auf diese Weise wird die maximale auf das Blech einwirkende Kraft vermindert und die Dauer der Krafteinwirkung entsprechend verlängert.

Es ist vorteilhaft, wenn der Schubkörper eine elastische Hülse aus Metall aufweist. Eine solche Hülse hat den Vorteil, daß sie beim Anstoßen an ein zu förderndes Blech auch in sich verformt wird, also selber Formänderungsarbeit speichert, wodurch die Krafteinwirkung auf das Blech weiter abgeflacht wird. Die Verformung des Schubkörpers besteht vor allem darin, daß seine elastische Hülse leicht abgeplattet wird, wodurch die Fläche, in der sie das zu fördernde Blech berührt, vergrößert und somit die Flächenpressung vermindert wird. Auch dies trägt dazu bei, Eindrücke im Blech zu vermeiden.

Es ist ferner zweckmäßig, wenn die Hülse nahe ihren beiden Enden durch je eine Zwischenlage in Form einer elektrisch isolierenden Ringscheibe an einer am Tragkörper befestigten Achse abgestützt ist. Daraus ergibt sich der zusätzliche Vorteil, daß sich die Hülse wie ein Balken auf zwei Stützen verbiegen und somit zusätzliche elastische Formänderungsarbeit speichern kann. Durch die elektrisch isolierende Eigenschaft der Zwischenlagen wird vermieden, daß vom Schweißstrom induzierte vagabundierende Ströme über die Mitnehmer und zugehörigen Fördereinrichtungen fließen können.

Bei einer anderen Ausführungsform der Erfindung ist der Schubkörper ein Stab mit einer Rückenfläche, und als Zwischenlage ist eine Platte von ungefähr gleicher Länge und Breite wie die Rückenfläche vorgesehen, die mit dieser und mit dem Tragkörper in Haftverbindung steht. Die Haftverbindung kann beispielsweise durch Vulkanisieren oder Kleben hergestellt sein.

Der Schubkörper kann, wie bei dem eingangs beschriebenen bekannten Mitnehmer, aus keramischem Werkstoff bestehen. Es ist aber auch möglich, einen Schubkörper aus Hartmetall oder anderem verschleißfesten Werkstoff zu verwenden. Dabei ist es unschädlich, wenn der Schubkörper als solcher elektrisch leitend ist, denn die elastische Zwischenlage läßt sich auf jeden Fall aus einem elektrisch nichleitenden Werkstoff herstellen.

Schließlich kann die Erfindung dadurch weitergebildet sein, daß der Schubkörper eine abgeflachte Vorderseite aufweist und durch die Zwischenlage drehelastisch abgestützt ist. Diese Weiterbildung hat den Vorteil, daß die vom Schubkörper auf das zu fördernde Blech ausgeübte Kraft sich auf eine größere Fläche verteilt; dabei sorgt die drehelastische Abstützung des Schubkörpers dafür, daß überhöhte Kantenpressungen infolge zufälliger Schrägstellungen des Schubkörpers vermieden werden.

Ausführungsbeispiele der Erfindung werden im folgenden anhand schematischer Zeichnungen mit weiteren Einzelheiten erläutert. Es zeigen:
- Fig. 1A: eine erste Ausführungsform eines Mitnehmers im Schnitt A-A in Fig. 1B;
- Fig. 1B: den Schnitt B-B in Fig. 1A;
- Fig. 1C: eine Variante von Fig. 1B;
- Fig. 1D: den nur teilweise gezeichneten Schnitt D-D in Fig. 1C;
- Fig. 2E bis 2H: eine zweite Ausführungsform eines Mitnehmers in entsprechenden Darstellungen wie in Fig. 1A bis 1D;
- Fig. 3J bis 3M: eine dritte Ausführungsform eines Mitnehmers in ebenfalls entsprechenden Darstellungen; und

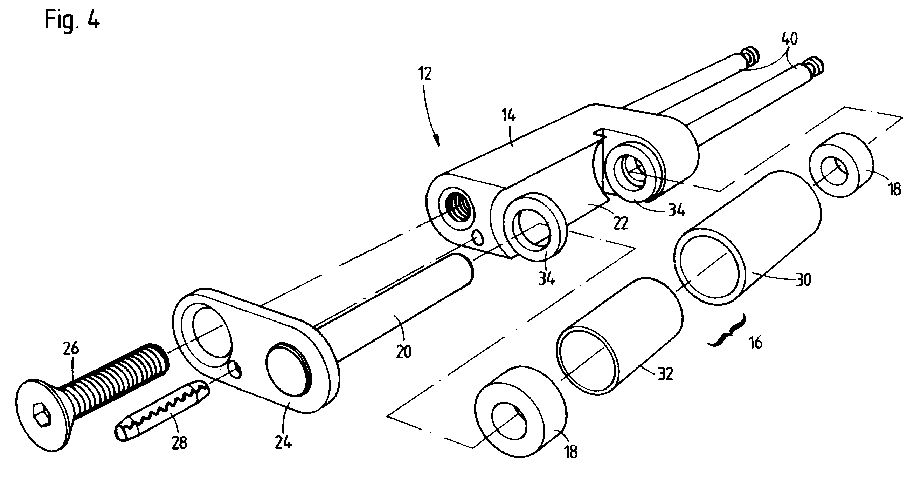

- Fig. 4: eine auseinandergezogene perspektivische Darstellung des Mitnehmers gemäß Fig. 1A und 1B.

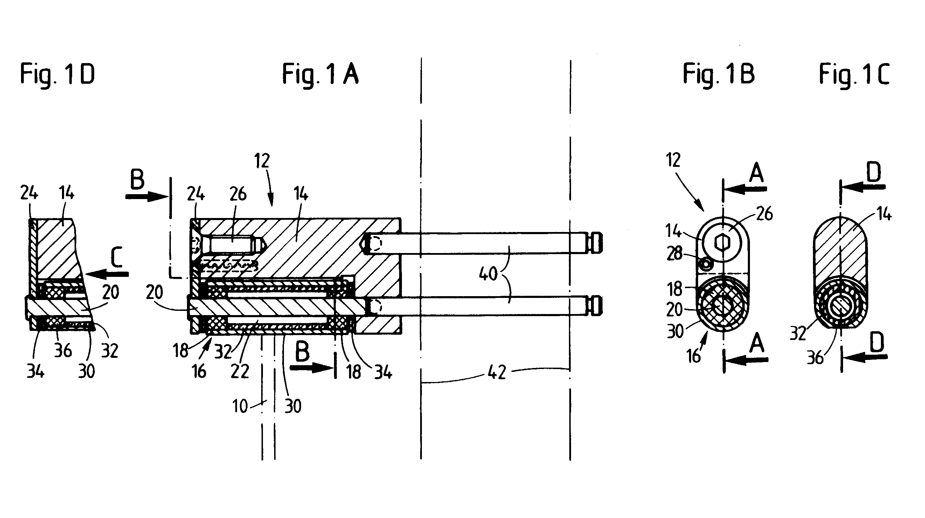

Gemäß Fig. 1A und 1B ist zum Fördern eines dünnen Blechs 10 in Gestalt einer ebenen Platine oder gerundeten Dosenzarge ein Mitnehmer 12 vorgesehen, dessen Hauptbestandteile ein Tragkörper 14, ein Schubkörper 16 sowie ein Paar elastische Zwischenlagen 18 sind.

Zum Tragkörper 14 gehört eine quer zum Blech 10 angeordnete Achse 20, die sich durch eine vordere Ausnehmung 22 erstreckt. Diese beginnt an einer Seite des Tragkörpers 14, in Fig. 1A links, und erstreckt sich nahezu bis zur gegenüberliegenden Seite des Tragkörpers 14. An der linken Seite des Tragkörpers 14 ist eine Deckplatte 24 mit einer Schraube 26 befestigt und durch einen Paßstift 28 gegen Drehen gesichert. Die Achse 20 ist mit ihrem in Fig. 1A linken Ende in der Deckplatte 24, und mit ihrem gegenüberliegenden Ende im Tragkörper 14 befestigt.

Auf der Achse 20 ist durch die beiden Zwischenlagen 18 eine dünnwandige Hülse 30 aus hartem, elastischem Stahl zentriert gehalten. Die Hülse 30 bildet zusammen mit einer von ihr umschlossenen Distanzbüchse 32 den Schubkörper 16. Die beiden Zwischenlagen 18 haben die Form je einer Ringscheibe und sind in je einem Endbereich der Hülse 30 in einem Abstand voneinander angeordnet, der durch die Distanzbüchse 32 festgelegt ist. Axial außerhalb der beiden Zwischenlagen 18 ist je eine Beilagscheibe 34 angeordnet, die eine unmittelbare Berührung der Hülse 30 mit dem Tragkörper 14 und der Deckplatte 24 verhindert.

Der Tragkörper 14 und die Deckplatte 24 bestehen aus üblichem Maschinenbaustahl. Die Hülse 30 besteht aus federelastischem gehärteten Stahl. Die beiden Zwischenlagen 18 bestehen aus Gummi oder elastischem, elektrisch isolierendem Kunststoff. Die Distanzbüchse 32 sowie die beiden Beilagscheiben 34 bestehen ebenfalls aus Kunststoff, beispielsweise Polyamid, wobei von Bedeutung ist, daß auch die beiden Beilagscheiben 34 elektrisch isolieren.

Gemäß Fig. 1A und 1B ist die Hülse 30 außen wie innen vollständig zylindrisch. Gemäß Fig. 1C und 1D weist die Hülse 30 hingegen eine abgeflachte, zur Achse 20 parallele Vorderseite 36 auf, mit der sie am zu fördernden Blech 10 angreift. Der Ausführungsform gemaß Fig. 1A und 1B und ihrer in Fig. 1C und 1D dargestellten Variante ist gemeinsam, daß die Hülse 30 innerhalb der von der Deckplatte 24 begrenzten Ausnehmung 22 endet.

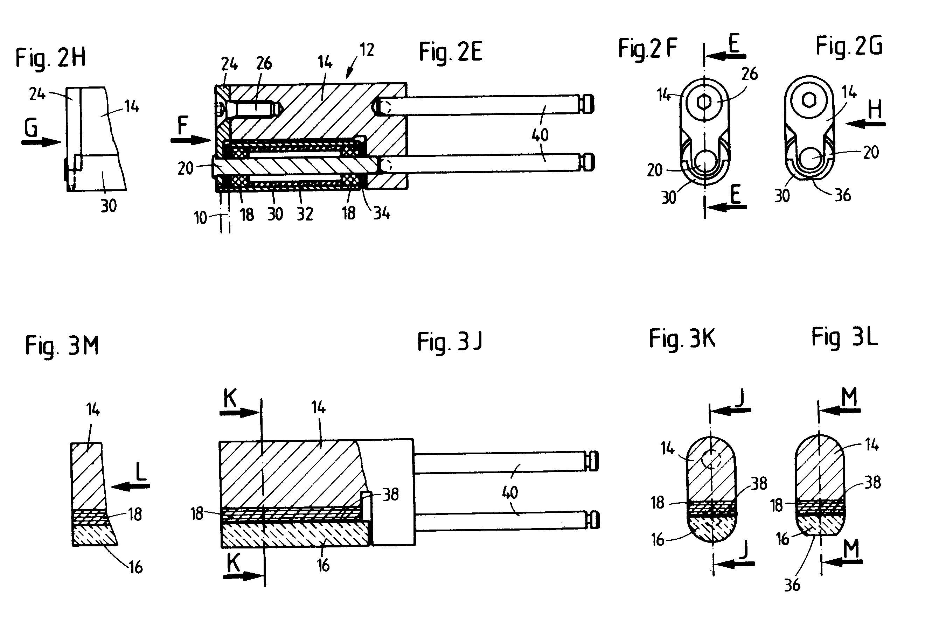

Im Gegensatz dazu erstreckt sich bei dem in Fig. 2E und 2F dargestellten Ausführungsbeispiel eine schalenartige Verlängerung der Hülse 30 axial über die Deckplatte 24 hinweg und hat von dieser einen radialen Abstand; zu diesem Zweck ist die Deckplatte 24 rings um die Achse 20 mit einem verminderten Radius abgerundet. Die gemäß Fig. 2E und 2F verlängerte Hülse 30 hat den Vorteil, daß sie, wie in Fig. 2E angedeutet, auch in ihrem Randbereich, mit dem sie die Deckplatte 24 umschließt, an einem zu fördernden Blech 10 angreifen kann. Mit anderen Worten verhindert diese Anordnung, daß die Deckplatte 24 selber gegen ein zu förderndes Blech 10 stößt. Dies gilt auch für die in Fig. 2G und 2H dargestellte Variante, bei der die Hülse 30 wiederum eine flache Vorderseite 36 aufweist. Dabei hat die Verlängerung der Hülse 30 über die Deckplatte 24 hinweg den zusätzlichen Vorteil, daß sie einen Einbau gewährleistet, bei der die Vorderseite 36 tatsächlich vorne liegt und sich auch im Betrieb nicht verdrehen kann.

Bei der in Fig. 3J und 3K dargestellten Ausführungsform ist der Schubkörper 16 ein halbzylindrischer Stab aus keramischem Werkstoff mit einer ebenen Rückenfläche 38, die sich quer zum zu fördernden Blech 10 erstreckt. Als Zwischenlage 18 ist eine Gummiplatte mit gleicher Länge und Breite wie die Rückenfläche 38 vorgesehen, die an diese Rückenfläche sowie an eine dazu parallele Fläche des Tragkörpers 14 anvulkanisiert ist.

Bei der in Fig. 3L und 3M dargestellten Variante weist der Schubkörper 16 wiederum eine flache Vorderseite 36 auf; diese erstreckt sich parallel zur Rückenfläche 38 und hat eine etwas geringere Breite als diese.

Bei sämtlichen dargestellten Ausführungsbeispielen ist der Schubkörper 16 durch die Zwischenlage(n) 18 nicht nur rückwärts, zum Tragkörper 14 hin, sondern auch drehelastisch abgestützt, d.h. er kann sich in einem begrenzten Winkelbereich um eine geometrische Achse drehen, die der Achse 20 entspricht.

Ebenfalls in allen dargestellten Ausführungsbeispielen ist am Tragkörper 14 ein Paar Stifte 40 befestigt, die sich durch Laschenpaare einer nur angedeuteten Gall'schen Kette hindurchstecken lassen, so daß sie zusammen mit dem Mitnehmer 12 ein Kettenglied bilden.

## Patentansprüche

1. Mitnehmer zum Fördern dünner Bleche (10) an einer Dosenschweißmaschine, mit
- einem Tragkörper (14), der an einer Fördereinrichtung zu befestigen ist, und
- einem Schubkörper (16), der aus verschleißfestem Werkstoff besteht und am Tragkörper (14) derart befestigt ist, daß er bei dessen Vorwärtsbewegung an einer Hinterkante eines zu fördernden Blechs (10) angreift,
dadurch **gekennzeichnet,** daß der Schubkörper (16) über mindestens eine elastische Zwischenlage (18) rückwärtsfedernd am Tragkörper (14) abgestützt ist.

2. Mitnehmer nach Anspruch 1,
dadurch **gekennzeichnet,** daß der Schubkörper (16) eine elastische Hülse (30) aus Metall aufweist.

3. Mitnehmer nach Anspruch 2,
dadurch **gekennzeichnet,** daß die Hülse (30) nahe ihren beiden Enden durch je eine Zwischenlage (18) in Form einer elektrisch isolierenden Ringscheibe an einer am Tragkörper (14) befestigten Achse (20) abgestützt ist.

4. Mitnehmer nach Anspruch 1,
dadurch **gekennzeichnet,** daß
- der Schubkörper (16) ein Stab mit einer Rückenfläche (38) ist, und
- als Zwischenlage (18) eine Platte von ungefähr gleicher Länge und Breite wie die Rückenfläche (38) vorgesehen ist, die mit dieser und mit dem Tragkörper (14) in Haftverbindung steht.

5. Mitnehmer nach Anspruch 4,
dadurch **gekennzeichnet,** daß der Schubkörper (16) aus keramischem Werkstoff besteht.

6. Mitnehmer nach Anspruch 4,
dadurch **gekennzeichnet,** daß der Schubkörper (16) aus Hartmetall besteht.

7. Mitnehmer nach einem der Ansprüche 1 bis 6,
dadurch **gekennzeichnet,** daß der Schubkörper (16) eine abgeflachte Vorderseite (36) aufweist und durch die Zwischenlage (18) drehelastisch abgestützt ist.

## Claims

1. Driver for conveying thin metal sheets (10) on a can welding machine, having
- a support body (14) which is to be fastened on a conveying device, and
- a thrust body (16) which is made of wear-resistant material and is fastened to the support body (14) in such a manner that when the latter moves forwards it bites on a rear edge of a metal sheet (10) being conveyed,
characterised in that the thrust body (16) rests with rearward resilience on the support body (14) via at least one elastic shim (18).

2. Driver according to claim 1,
characterised in that the thrust body (16) incorporates an elastic sleeve (30) made of metal.

3. Driver according to claim 2,
characterised in that near its two ends the sleeve (30) is supported by a respective shim (18) in the form of an electrically insulating washer on a shaft (20) fastened to the support body (14).

4. Driver according to claim 1,
characterised in that
- the thrust body (16) is a bar with a back surface (38), and
- as the shim (18) there is provided a plate of approximately the same length and width as the back surface (38), which forms a joint with the latter and with the support body (14).

5. Driver according to claim 4,
characterised in that the thrust body (16) is made of ceramic material.

6. Driver according to claim 4,
characterised in that the thrust body (16) is made of carbide.

7. Driver according to any of claims 1 to 6,
characterised in that the thrust body (16) features a flattened front face (36) and is supported in torsionally elastic manner by the shim (18).

## Revendications

1. Dispositif d'entraînement pour faire avancer des tôles minces (10) dans une machine de soudage de boîtes, comprenant :
- un corps de support (14) qui est destiné à être fixé à un convoyeur; et
- un corps de poussée (16) qui est réalisé en une matière résistance à l'usure et est fixé au corps de support (14) de façon à attaquer, lors de son mouvement vers l'avant, un bord arrière d'une tôle (10) à faire avancer,
caractérisé en ce que le corps de poussée (16) est appliqué vers l'arrière de façon élastique contre le corps de support (14) par l'intermédiaire d'au moins une couche intermédiaire élastique (18).

2. Dispositif suivant la revendication 1, caractérisé en ce que le corps de poussée (16) comprend un manchon élastique (30) réalisé en métal.

3. Dispositif suivant la revendication 2, caractérisé en ce que le manchon (30) est supporté, près de ses deux extrémités, par un axe (20) fixé au corps de support (14), par l'intermédiaire de paliers intermédiaires respectifs (18) réalisés sous la forme de disques annulaires électriquement isolants.

4. Dispositif suivant la revendication 1, caractérisé :
- en ce que le corps de poussée (16) est constitué par une barre comportant une surface arrière (38), et
- en ce qu'il est prévu comme couche intermédiaire (18) une plaque ayant à peu près la même longueur et la même largeur que la surface arrière (38) et qui est adhérisée sur celle-ci et sur le corps de support (14).

5. Dispositif suivant la revendication 4, caractérisé en ce que le corps de poussée (16) est constitué d'un matériau céramique.

6. Dispositif suivant la revendication 4, caractérisé en ce que le corps de poussée (16) est constitué de métal dur.

7. Dispositif suivant l'une des revendications 1 à 6, caractérisé en ce que le corps de poussée (16) comporte un côté avant aplani (36) et est supporté élastiquement dans le sens de la rotation par la couche intermédiaire (18).
